(19) Europäisches Patentamt
European Patent Office
Office européen des brevets

(11) **EP 3 726 701 A1**

(12) **EUROPEAN PATENT APPLICATION**

(43) Date of publication:
**21.10.2020 Bulletin 2020/43**

(51) Int Cl.:
*H02J 50/10* (2016.01)    *B60L 53/12* (2019.01)
*H01F 27/28* (2006.01)    *H01F 38/14* (2006.01)
*H02J 50/70* (2016.01)

(21) Application number: **19196691.0**

(22) Date of filing: **11.09.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.04.2019 CN 201910304253**

(71) Applicant: **Primax Electronics Ltd**
**Taipei (TW)**

(72) Inventor: **WANG, Sheng-Cai**
**Taipei, Taiwan (TW)**

(74) Representative: **Haseltine Lake Kempner LLP**
**Redcliff Quay**
**120 Redcliff Street**
**Bristol BS1 6HU (GB)**

(54) **WIRELESS CHARGING DEVICE AND TRANSMITTING MODULE AND TRANSMITTER COIL THEREOF**

(57)    A transmitter coil includes a winding part. The winding part is an elliptic-shaped spirally-wound coil with a hollow portion. The outer major axis length of the winding part is in the range between 78 mm and 82 mm. The outer minor axis length of the winding part is in the range between 44 mm and 48 mm. The inner major axis length of the winding part is in the range between 54 mm and 58 mm. The inner minor axis length of the winding part is in the range between 19 mm and 23 mm. The turn number of the winding part is in the range between 8 and 12. A transmitting module with the transmitter coil and a wireless charging device with the transmitter coil are also provided.

FIG.5

**Description**

FIELD OF THE INVENTION

The present invention relates to a charging device, and more particularly to a wireless charging device using a wireless charging technology.

BACKGROUND OF THE INVENTION

Conventionally, most electronic devices have to be connected with power sources (for example power sockets) to acquire electric power through power cables. Consequently, the electronic devices can be normally operated. With increasing development of science and technology, a variety of electronic devices are developed toward small size and light weightiness in order to comply with the users' requirements. Moreover, for allowing the electronic device to be easily carried, a built-in chargeable battery is usually installed in the electronic device. Consequently, the electronic device can acquire electric power from the chargeable battery without the need of using the power cable.

For example, in case that the electricity quantity of the chargeable battery within the electronic device is insufficient, the chargeable battery of the electronic device may be charged by a charging device. Generally, the conventional charging device has a connecting wire. After the conventional charging device is connected with a utility power source and the connecting wire of the charging device is plugged into the electronic device, the electric power from the utility power source can be transmitted to the electronic device through the connecting wire so as to charge the chargeable battery.

However, the applications of the charging device are usually restricted by the connecting wire during the charging process. For example, since the length of the connecting wire of the charging device is limited, the electronic device cannot be operated according to the usual practice or the electronic device cannot be arbitrarily moved. On the other hand, if the conventional charging device has been repeatedly used to charge the electronic device for a long term, the connecting wire of the charging device is readily damaged because the connector of the connecting wire is frequently plugged into and removed from the electronic device. Under this circumstance, the efficiency of transmitting the electric power is deteriorated. If the connector is seriously damaged, the electric energy cannot be transmitted through the connecting wire.

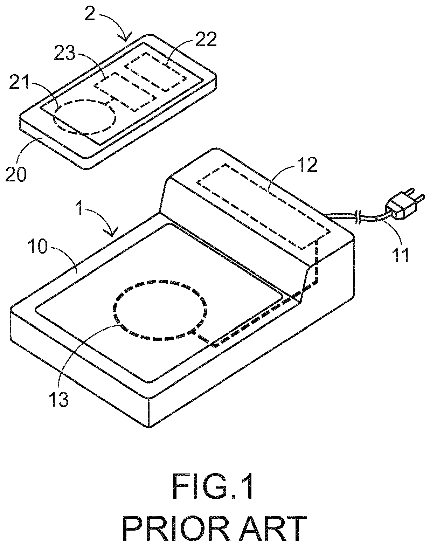

With increasing development of a wireless charging technology, a wireless charging device for wirelessly charging the electronic device becomes more popular. FIG. 1 schematically illustrates the relationship between a conventional wireless charging device and a conventional electronic device. As shown in FIG. 1, the conventional wireless charging device 1 comprises a casing 10, a power cable 11, a driving circuit module 12 and a transmitting module 13. The power cable 11 is exposed outside the casing 10 in order to be connected with a utility power source (not shown). Both of the driving circuit module 12 and the transmitting module 13 are disposed within the casing 10. Moreover, the driving circuit module 12 is electrically connected between the power cable 11 and the transmitting module 13. When the utility power source provides electric energy to the driving circuit module 12, the driving circuit module 12 is driven by an input power. When the corresponding electric current flows through the transmitting module 13, an electromagnetic effect is generated. According to the electromagnetic effect, a magnetic flux is generated by the transmitting module 13.

The conventional electronic device 2 comprises a casing 20, a receiving module 21, a chargeable battery 22 and a driving circuit module 23. The receiving module 21, the chargeable battery 22 and the driving circuit module 23 are all disposed within the casing 20. The driving circuit module 23 is electrically connected between the chargeable battery 22 and the receiving module 21. The receiving module 21 may receive at least a portion of the magnetic flux from the transmitting module 13. The portion of the magnetic flux which is received by the receiver coil 21 is further converted into a corresponding electric current by the driving circuit module 23. The electric current is transmitted to the chargeable battery 22 in order to perform the charging operation.

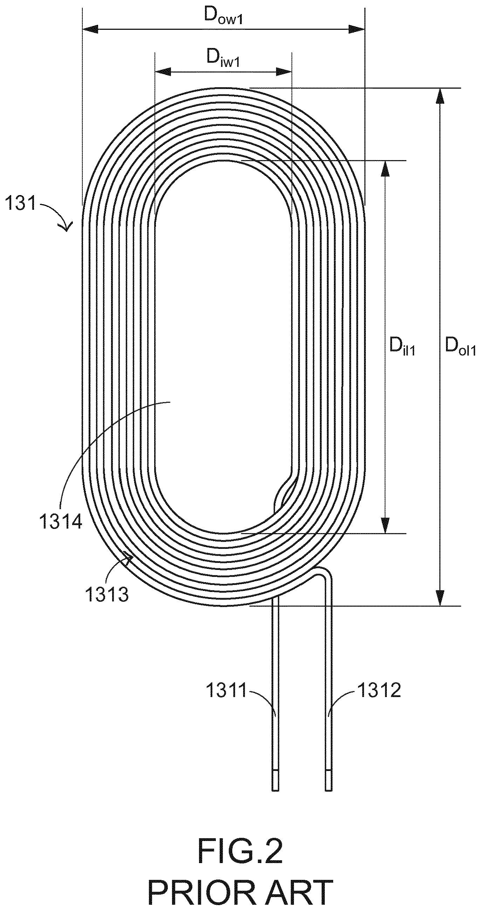

FIG. 2 schematically illustrates the structure of a transmitter coil of the transmitting module as shown in FIG. 1. In FIG. 2, the appearance of the transmitter coil 131 of the transmitting module 13 is shown. For example, the transmitter coil 131 is a conventional A6 transmitter coil. The transmitter coil 131 comprises an output terminal 1311, an input terminal 1312 and a winding part 1313. The winding part 1313 is connected between the output terminal 1311 and the input terminal 1312. The winding part 1313 is electrically connected with the driving circuit module 12 through the output terminal 1311 and the input terminal 1312. The winding part 1313 is an elliptic-shaped spirally-wound coil with a hollow portion 1314. That is, the winding part 1313 is substantially an elliptic rack track structure with an outer elliptic curve and an inner elliptic curve. In this context, the major axis length and the minor axis length of the outer elliptic curve are respectively referred as the outer major axis length and the outer minor axis length, and the major axis length and the minor axis length of the inner elliptic curve are respectively referred as the inner major axis length and the inner minor axis length. For example, the outer major axis length $D_{ol1}$ and the outer minor axis length $D_{ow1}$ of the winding part 1313 are respectively 53.2 mm and 45.2 mm, and the inner major axis length $D_{il1}$ and the outer minor axis length $D_{iw1}$ of the winding part 1313 are respectively 27.5 mm and 19.5 mm. Moreover, the turn number of the winding part 1313 is 12.

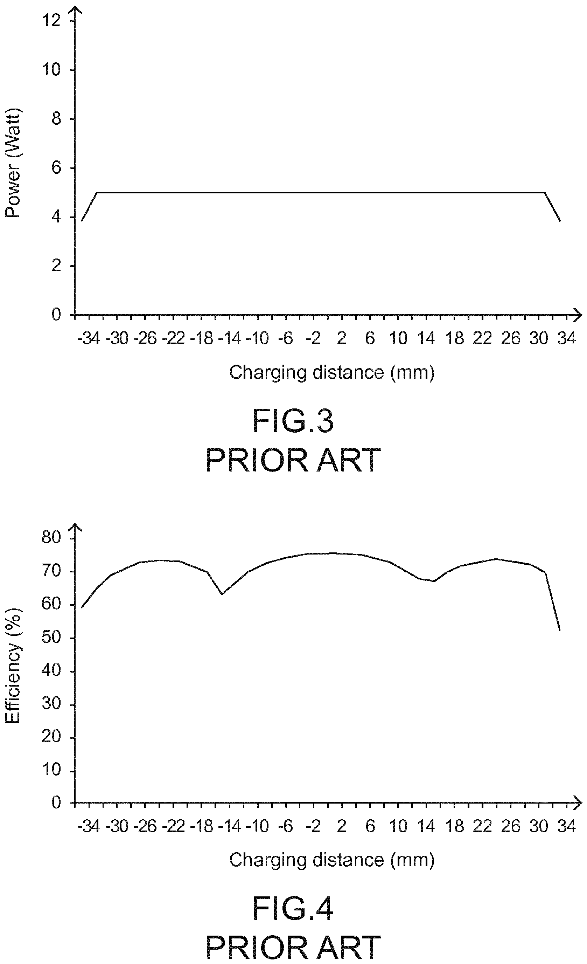

Please refer to FIGS. 3 and 4. FIG. 3 is a plot illustrating the relationship between the received power (Watt) and the charging distance (mm) for the electronic device with three transmitter coils of FIG. 2 in an array arrangement. FIG. 4 is a plot illustrating the relationship between the charging efficiency (%) and the charging distance (mm) for the electronic device with three transmitter coils of FIG. 2 in an array arrangement. The results of FIGS. 3 and 4 indicate that the maximum received power of the electronic device 2 is 10W. Moreover, the charging distance is the distance from the center point of the winding part 1313. The charging efficiency is defined as the ratio of the received power of the electronic device 2 to the input power of the wireless charging device 1. The results of FIG. 3 indicate that the received power (W) corresponding to various charging distances is not higher than 5W. The results of FIG. 4 indicate that the charging efficiencies (%) corresponding to different charging distances are not uniformly distributed. That is, the charging efficiency fluctuates between a high level and a low level. After undue experiments, the applicant found that the shape, size and turn number of the transmitter coil 131 are important factors influencing the received power and the charging efficiency corresponding to each charging distance.

Generally, the wireless charging devices complying with the wireless charging standard (Qi) are classified into two types. In the first type wireless charging device 1, the transmitting module 13 comprises a single transmitter coil 131. However, the charging area is usually small, and the charged position of the electronic device 2 is requested stringently. In the second type wireless charging device 1, the transmitting module 13 comprises plural transmitter coils 131. According to the placed position of the electronic device 2, one transmitter coil 131 or plural transmitter coils 131 are enabled. However, the volume is huge, the cost is high, and the magnetic field uniformity is deteriorated. If at least two of the transmitter coils 131 are overlapped with each other along the vertical direction, a sensing dead zone occurs. Moreover, it is difficult to design the software or firmware for the second type wireless charging device 1.

In other words, the wireless charging device and the transmitting module and the transmitter coil of the wireless charging device need to be further improved.

SUMMARY OF THE INVENTION

An object of the present invention provides a transmitter coil. The shape, size and turn number of the transmitter coil are specially designed. Consequently, the magnetic field uniformity and the charging area are increased.

Another object of the present invention provides a transmitting module with the transmitter coil.

A further object of the present invention provides a wireless charging device with the transmitting module. Consequently, the fabricating cost is reduced, and the wireless charging device is suitable for mass production.

In accordance with an aspect of the present invention, a transmitter coil for a wireless charging device is provided. The transmitter coil includes an output terminal, an input terminal and a winding part. The winding part is connected between the output terminal and the input terminal. The winding part is electrically connected with a driving circuit module through the output terminal and the input terminal. The winding part is an elliptic-shaped spirally-wound coil with a hollow portion. Moreover, the winding part satisfies following mathematic formulae:

$$78\text{ mm} \leq D_{ol} \leq 82\text{ mm;}$$

$$44\text{ mm} \leq D_{ow} \leq 48\text{ mm;}$$

$$54\text{ mm} \leq D_{il} \leq 58\text{ mm;}$$

$$19\text{ mm} \leq D_{iw} \leq 23\text{ mm;}$$

and

$$8 \leq T \leq 12,$$

wherein $D_{ol}$ is an outer major axis length of the winding part, $D_{ow}$ is an outer minor axis length of the winding part, $D_{il}$ is an inner major axis length of the winding part, $D_{iw}$ is an inner minor axis length of the winding part, and T is a turn number of the winding part.

In accordance with another aspect of the present invention, a transmitting module for a wireless charging device is provided. The transmitting module includes a magnetic isolation plate and a transmitter coil. At least a portion of the transmitter coil is disposed on the magnetic isolation plate. The transmitter coil includes an output terminal, an input terminal and a winding part. The winding part is connected between the output terminal and the input terminal. The winding part is electrically connected with a driving circuit module through the output terminal and the input terminal. The winding part is an elliptic-shaped spirally-wound coil with a hollow portion. Moreover, the winding part satisfies following mathematic formulae:

$$78\text{ mm} \leq D_{ol} \leq 82\text{ mm;}$$

$$44\text{ mm} \leq D_{ow} \leq 48\text{ mm;}$$

$$54\text{ mm} \leq D_{il} \leq 58\text{ mm;}$$

$$19 \text{ mm} \leq D_{iw} \leq 23 \text{ mm};$$

and

$$8 \leq T \leq 12,$$

wherein $D_{ol}$ is an outer major axis length of the winding part, $D_{ow}$ is an outer minor axis length of the winding part, $D_{il}$ is an inner major axis length of the winding part, $D_{iw}$ is an inner minor axis length of the winding part, and T is a turn number of the winding part.

In accordance with a further aspect of the present invention, a wireless charging device is provided. The wireless charging device includes a driving circuit module and a transmitting module. The transmitting module includes a magnetic isolation plate and a transmitter coil. At least a portion of the transmitter coil is disposed on the magnetic isolation plate. The transmitter coil includes an output terminal, an input terminal and a winding part. The winding part is connected between the output terminal and the input terminal. The winding part is electrically connected with the driving circuit module through the output terminal and the input terminal. The winding part is an elliptic-shaped spirally-wound coil with a hollow portion. Moreover, the winding part satisfies following mathematic formulae:

$$78 \text{ mm} \leq D_{ol} \leq 82 \text{ mm};$$

$$44 \text{ mm} \leq D_{ow} \leq 48 \text{ mm};$$

$$54 \text{ mm} \leq D_{il} \leq 58 \text{ mm};$$

$$19 \text{ mm} \leq D_{iw} \leq 23 \text{ mm};$$

and

$$8 \leq T \leq 12,$$

wherein $D_{ol}$ is an outer major axis length of the winding part, $D_{ow}$ is an outer minor axis length of the winding part, $D_{il}$ is an inner major axis length of the winding part, $D_{iw}$ is an inner minor axis length of the winding part, and T is a turn number of the winding part.

The above objects and advantages of the present invention will become more readily apparent to those ordinarily skilled in the art after reviewing the following detailed description and accompanying drawings, in which:

BRIEF DESCRIPTION OF THE DRAWINGS

FIG. 1 schematically illustrates the relationship between a conventional wireless charging device and a conventional electronic device;
FIG. 2 schematically illustrates the structure of a transmitter coil of the transmitting module as shown in FIG. 1;
FIG. 3 is a plot illustrating the relationship between the received power (Watt) and the charging distance (mm) for the electronic device with three transmitter coils of FIG. 2 in an array arrangement;
FIG. 4 is a plot illustrating the relationship between the charging efficiency (%) and the charging distance (mm) for the electronic device with three transmitter coils of FIG. 2 in an array arrangement;
FIG. 5 is a schematic functional block diagram illustrating the architecture of a wireless charging device according to an embodiment of the present invention;
FIG. 6 is a schematic top view illustrating the structure of a transmitting module of the wireless charging device as shown in FIG. 5;
FIG. 7 is a plot illustrating the relationship between the received power (Watt) and the charging distance (mm) for the electronic device with a single transmitter coil as shown in FIG. 6;
FIG. 8 is a plot illustrating the relationship between the charging efficiency (%) and the charging distance (mm) for the electronic device with a single transmitter coil as shown in FIG. 6;
FIG. 9 is a schematic top view illustrating another example of the magnetic isolation plate in the transmitting module of the wireless charging device; and
FIG. 10 is a schematic cross-sectional view illustrating the magnetic isolation plate as shown in FIG. 9 and taken along the line XX.

DETAILED DESCRIPTION OF THE PREFERRED EMBODIMENT

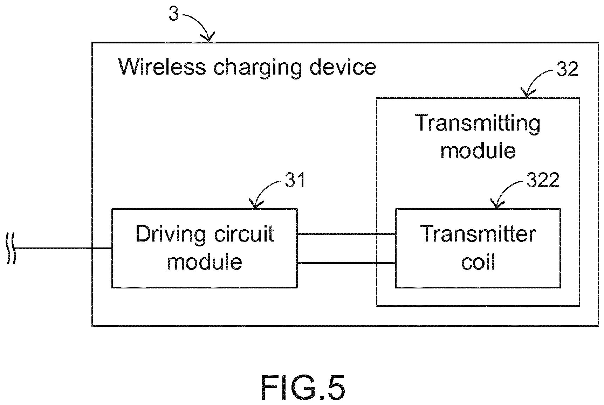

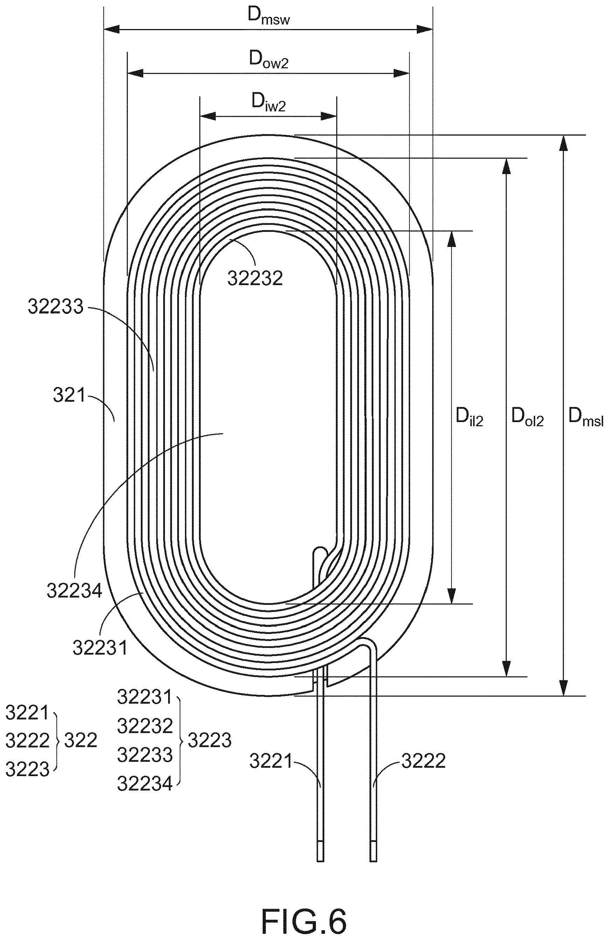

Please refer to FIGS. 5 and 6. FIG. 5 is a schematic functional block diagram illustrating the architecture of a wireless charging device according to an embodiment of the present invention. FIG. 6 is a schematic top view illustrating the structure of a transmitting module of the wireless charging device as shown in FIG. 5. The wireless charging device 3 comprises a driving circuit module 31 and a transmitting module 32. The driving circuit module 31 is electrically connected between a power source (not shown) and the transmitting module 32.

The transmitting module 32 comprises a magnetic isolation plate 321 and a transmitter coil 322. At least a portion of the transmitter coil 322 is disposed on the magnetic isolation plate 321. The transmitter coil 322 comprises an output terminal 3221, an input terminal 3222 and a winding part 3223. The winding part 3223 is connected between the output terminal 3221 and the input terminal 3222. The winding part 3223 is electrically connected with the driving circuit module 31 through the output terminal 3221 and the input terminal 3222.

When the power source provides electric energy to the driving circuit module 31, the driving circuit module 31 is driven by an input power. When the corresponding electric current flows through the transmitting module 32, an electromagnetic effect is generated. According to the electromagnetic effect, a magnetic flux is generated by the transmitter coil 322. Consequently, an electronic device with a receiver coil (not shown) can be charged by the wireless charging device 3.

The transmitter coil 322 complies with the wireless charging standard (Qi). The winding part 3223 of the transmitter coil 322 is an elliptic-shaped spirally-wound coil with a hollow portion 3224. That is, the winding part 1313 is substantially an elliptic rack track structure with an outer elliptic curve and an inner elliptic curve. In this context, the major axis length and the minor axis length of the outer elliptic curve are respectively referred as the outer major axis length and the outer minor axis length, and the major axis length and the minor axis length of the inner elliptic curve are respectively referred as the inner major axis length and the inner minor axis length. In an embodiment, the winding part 3223 comprises an outermost coil segment 32231, an innermost coil segment 32232 and plural intermediate coil segments 32233. The plural intermediate coil segments 32233 are arranged between the outermost coil segment 32231 and the innermost coil segment 32232. In accordance with a feature of the present invention, the winding part 3223 satisfies following mathematic formulae:

$$78 \text{ mm} \leq D_{ol2} \leq 82 \text{ mm};$$

$$44 \text{ mm} \leq D_{ow2} \leq 48 \text{ mm};$$

$$54 \text{ mm} \leq D_{il2} \leq 58 \text{ mm};$$

$$19 \text{ mm} \leq D_{iw2} \leq 23 \text{ mm};$$

and

$$8 \leq T \leq 12.$$

In the above mathematic formulae, $D_{ol2}$ is an outer major axis length the winding part 3223, $D_{ow2}$ is an outer minor axis length of the winding part 3223, $D_{il2}$ is an inner major axis length of the winding part 3223, $D_{iw2}$

is an inner minor axis length of the winding part 3223, and T is a turn number of the winding part 3223.

Preferably but not exclusively, the winding part 3223 is a single-layered winding part. The outermost coil segment 32231, the innermost coil segment 32232 and every two adjacent ones of the plural intermediate coil segments 32233 are in close contact with each other. That is, there is no gap between every two adjacent ones of these coil segments. As shown in FIG. 6, the winding part 3223 is a single-layered and spirally-packed structure. In an embodiment, the outer major axis length $D_{ol2}$ and the outer minor axis length $D_{ow2}$ of the winding part 3223 are respectively 80 mm and 46 mm, the inner major axis length $D_{il2}$ and the outer minor axis length $D_{iw2}$ of the winding part 3223 are respectively 56 mm and 21 mm, and the turn number T of the winding part 3223 is 10.

The magnetic isolation plate 321 is used for preventing the magnetic flux of the transmitter coil 322 from leaking to the underlying position of the magnetic isolation plate 321. Consequently, the efficacy of shielding the components under the magnetic isolation plate 321 will be enhanced. Moreover, while the electronic device with the transmitter coil (not shown) is charged by the wireless charging device 3, the magnetic isolation plate 321 further has the function of providing the magnetic permeability. Consequently, the inductance of the transmitter coil 322 is increased. In an embodiment, the transmitter coil 322 is combined with the magnetic isolation plate 321 through an adhesive. Moreover, the magnetic isolation plate 321 is substantially an elliptic plate with no peripheral protrusion structure. The magnetic isolation plate 321 is made of ferrite, amorphous nanocrystalline or any other appropriate magnetic material. The major axis length $D_{msl}$ of the magnetic isolation plate 321 is in the range between 83 mm and 87 mm, and the minor axis length $D_{msw}$ is in the range between 48 mm and 52 mm. The shape, the material, the major axis length and the minor axis length of the magnetic isolation plate are presented herein for purpose of illustration and description only.

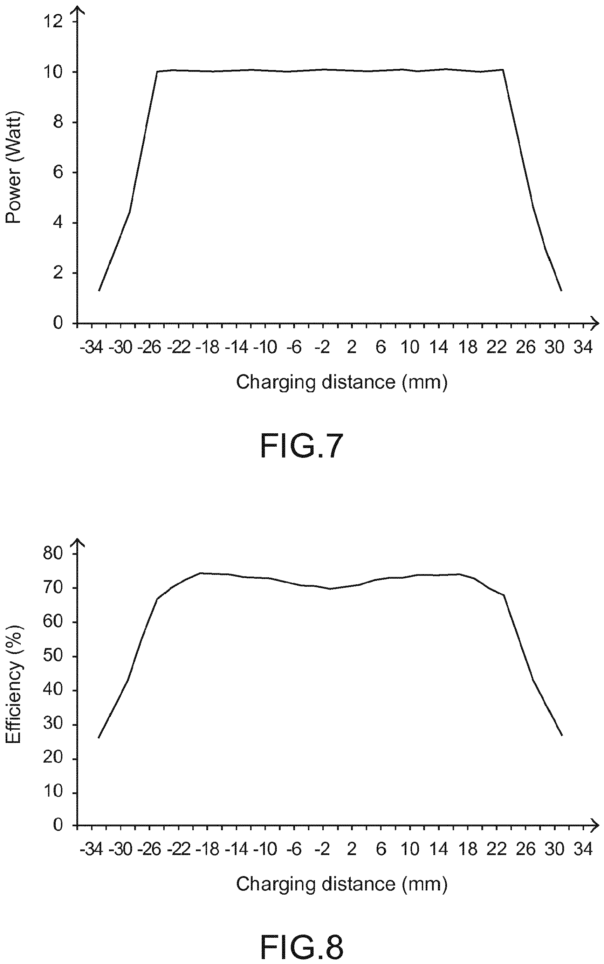

Please refer to FIGS. 7 and 8. FIG. 7 is a plot illustrating the relationship between the received power (Watt) and the charging distance (mm) for the electronic device with a single transmitter coil as shown in FIG. 6. FIG. 8 is a plot illustrating the relationship between the charging efficiency (%) and the charging distance (mm) for the electronic device with a single transmitter coil as shown in FIG. 6. In this embodiment, the outer major axis length $D_{ol2}$ and the outer minor axis length $D_{ow2}$ of the winding part 3223 are respectively 80 mm and 46 mm, the inner major axis length $D_{il2}$ and the outer minor axis length $D_{iw2}$ of the winding part 3223 are respectively 56 mm and 21 mm, and the turn number T of the winding part 3223 is 10. The results of FIGS. 7 and 8 indicate that the maximum received power of the electronic device 3 is 10W. Moreover, the charging distance is the distance from the center point of the winding part 3223. The charging efficiency is defined as the ratio of the received power of the electronic device to the input power of the wireless charging device 3.

When compared with the results of FIGS. 3 and 4, the results of FIGS. 7 and 8 indicate that the received power (W) corresponding to the charging distance between -30 mm and 30 mm is enhanced and the charging efficiencies (%) in various charging distances are more uniform. In other words, the charging area and the magnetic field uniformity of the wireless charging device 3 are increased. More especially, the wireless charging device 3 is equipped with a single transmitter coil 322. In comparison with the conventional wireless charging device with three or more transmitter coils 131 in the array arrangement, the fabricating cost of the wireless charging device 3 is reduced. The reduction of the fabricating cost of is helpful to the mass production of the wireless charging device 3.

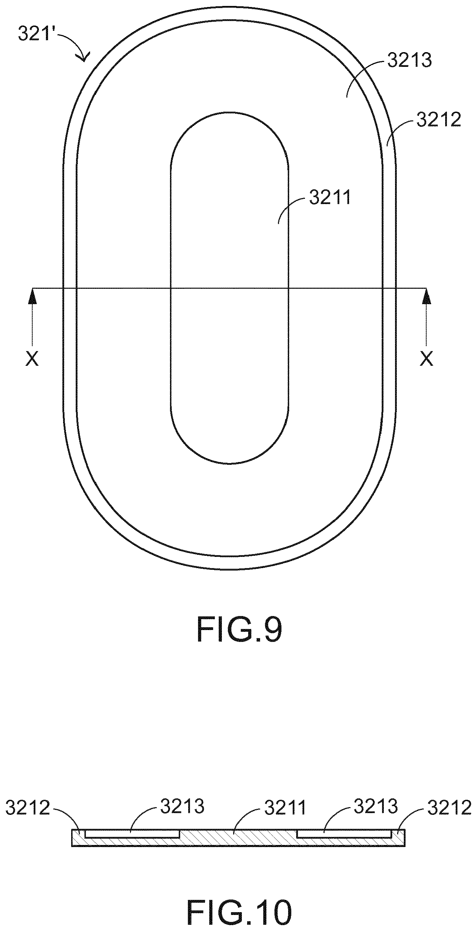

It is noted that numerous modifications and alterations may be made while retaining the teachings of the invention. Please refer to FIGS. 9 and 10. FIG. 9 is a schematic top view illustrating another example of the magnetic isolation plate in the transmitting module of the wireless charging device. FIG. 9 is a schematic cross-sectional view illustrating the magnetic isolation plate as shown in FIG. 10 and taken along the line XX. In the embodiment of FIG. 6, the magnetic isolation plate 321 is substantially a circular plate with no peripheral protrusion structure. In this embodiment, the structure of the magnetic isolation plate 321 is modified. As shown in FIGS. 9 and 10, the magnetic isolation plate 321' comprises a middle protrusion structure 3211 and a peripheral protrusion structure 3212. An accommodation space 3213 is formed between the middle protrusion structure 3211 and the peripheral protrusion structure 3212. At least a portion of the transmitter coil 322 is accommodated within the accommodation space 3213. Consequently, the efficacy of positioning the transmitter coil 322 is enhanced.

While the invention has been described in terms of what is presently considered to be the most practical and preferred embodiments, it is to be understood that the invention needs not be limited to the disclosed embodiments. On the contrary, it is intended to cover various modifications and similar arrangements included within the spirit and scope of the appended claims which are to be accorded with the broadest interpretation so as to encompass all such modifications and similar structures.

## Claims

1. A transmitter coil for a wireless charging device, the transmitter coil comprising:

   an output terminal;
   an input terminal; and
   a winding part connected between the output terminal and the input terminal, wherein the winding part is electrically connected with a driving circuit module through the output terminal and the input terminal, the winding part is an elliptic-shaped spirally-wound coil with a hollow portion, and the winding part satisfies following mathematic formulae:

$$78 \text{ mm} \leq D_{ol} \leq 82 \text{ mm};$$

$$44 \text{ mm} \leq D_{ow} \leq 48 \text{ mm};$$

$$54 \text{ mm} \leq D_{il} \leq 58 \text{ mm};$$

$$19 \text{ mm} \leq D_{iw} \leq 23 \text{ mm};$$

and

$$8 \leq T \leq 12,$$

   wherein $D_{ol}$ is an outer major axis length of the winding part, $D_{ow}$ is an outer minor axis length of the winding part, $D_{il}$ is an inner major axis length of the winding part, $D_{iw}$ is an inner minor axis length of the winding part, and T is a turn number of the winding part.

2. The transmitter coil according to claim 1, wherein the winding part is a single-layered winding part.

3. The transmitter coil according to claim 1, wherein the winding part comprises an outermost coil segment, an innermost coil segment and plural intermediate coil segments between the outermost coil segment and the innermost coil segment, wherein the outermost coil segment, the innermost coil segment and every two adjacent ones of the plural intermediate coil segments are in close contact with each other.

4. The transmitter coil according to claim 1, wherein the outer major axis length $D_{ol}$ of the winding part is 80 mm, the outer minor axis length $D_{ow}$ of the winding part is 46 mm, the inner major axis length $D_{il}$ of the winding part is 56 mm, the inner minor axis length $D_{iw}$ of the winding part is 21 mm, the turn number T of the winding part is 10.

5. The transmitter coil according to claim 1, wherein the transmitter coil complies with a wireless charging standard (Qi).

6. A transmitting module for a wireless charging device, the transmitting module comprising:

a magnetic isolation plate; and
a transmitter coil, wherein at least a portion of the transmitter coil is disposed on the magnetic isolation plate, and the transmitter coil comprises an output terminal, an input terminal and a winding part, wherein the winding part is connected between the output terminal and the input terminal, the winding part is electrically connected with a driving circuit module through the output terminal and the input terminal, the winding part is an elliptic-shaped spirally-wound coil with a hollow portion, and the winding part satisfies following mathematic formulae:

$$78 \text{ mm} \leq D_{ol} \leq 82 \text{ mm};$$

$$44 \text{ mm} \leq D_{ow} \leq 48 \text{ mm};$$

$$54 \text{ mm} \leq D_{il} \leq 58 \text{ mm};$$

$$19 \text{ mm} \leq D_{iw} \leq 23 \text{ mm};$$

and

$$8 \leq T \leq 12,$$

wherein $D_{ol}$ is an outer major axis length of the winding part, $D_{ow}$ is an outer minor axis length of the winding part, $D_{il}$ is an inner major axis length of the winding part, $D_{iw}$ is an inner minor axis length of the winding part, and T is a turn number of the winding part.

7. The transmitting module according to claim 6, wherein the winding part is a single-layered winding part.

8. The transmitting module according to claim 6, wherein the winding part comprises an outermost coil segment, an innermost coil segment and plural intermediate coil segments between the outermost coil segment and the innermost coil segment, wherein the outermost coil segment, the innermost coil segment and every two adjacent ones of the plural intermediate coil segments are in close contact with each other.

9. The transmitting module according to claim 6, wherein the outer major axis length $D_{ol}$ of the winding part is 80 mm, the outer minor axis length $D_{ow}$ of the winding part is 46 mm, the inner major axis length

$D_{il}$ of the winding part is 56 mm, the inner minor axis length $D_{iw}$ of the winding part is 21 mm, the turn number T of the winding part is 10.

10. The transmitting module according to claim 6, wherein the magnetic isolation plate is substantially an elliptic plate with no peripheral protrusion structure, and the transmitter coil is combined with the magnetic isolation plate through an adhesive.

11. The transmitting module according to claim 6, wherein the magnetic isolation plate comprises a middle protrusion structure and a peripheral protrusion structure, wherein an accommodation space is formed between the middle protrusion structure and the peripheral protrusion structure, and at least a portion of the transmitter coil is accommodated within the accommodation space.

12. The transmitting module according to claim 6, wherein the transmitter coil complies with a wireless charging standard (Qi).

13. A wireless charging device, comprising:

a driving circuit module; and
a transmitting module comprising a magnetic isolation plate and a transmitter coil, wherein at least a portion of the transmitter coil is disposed on the magnetic isolation plate, and the transmitter coil comprises an output terminal, an input terminal and a winding part, wherein the winding part is connected between the output terminal and the input terminal, the winding part is electrically connected with the driving circuit module through the output terminal and the input terminal, the winding part is an elliptic-shaped spirally-wound coil with a hollow portion, and the winding part satisfies following mathematic formulae:

$$78 \text{ mm} \leq D_{ol} \leq 82 \text{ mm};$$

$$44 \text{ mm} \leq D_{ow} \leq 48 \text{ mm};$$

$$54 \text{ mm} \leq D_{il} \leq 58 \text{ mm};$$

$$19 \text{ mm} \leq D_{iw} \leq 23 \text{ mm};$$

and

$$8 \leq T \leq 12,$$

wherein $D_{ol}$ is an outer major axis length of the winding part, $D_{ow}$ is an outer minor axis length of the winding part, $D_{il}$ is an inner major axis length of the winding part, $D_{iw}$ is an inner minor axis length of the winding part, and T is a turn number of the winding part.

14. The wireless charging device according to claim 13, wherein the winding part is a single-layered winding part.

15. The wireless charging device according to claim 13, wherein the winding part comprises an outermost coil segment, an innermost coil segment and plural intermediate coil segments between the outermost coil segment and the innermost coil segment, wherein the outermost coil segment, the innermost coil segment and every two adjacent ones of the plural intermediate coil segments are in close contact with each other.

16. The wireless charging device according to claim 13, wherein the outer major axis length $D_{ol}$ of the winding part is 80 mm, the outer minor axis length $D_{ow}$ of the winding part is 46 mm, the inner major axis length $D_{il}$ of the winding part is 56 mm, the inner minor axis length $D_{iw}$ of the winding part is 21 mm, the turn number T of the winding part is 10.

17. The wireless charging device according to claim 13, wherein the magnetic isolation plate is substantially an elliptic plate with no peripheral protrusion structure, and the transmitter coil is combined with the magnetic isolation plate through an adhesive.

18. The wireless charging device according to claim 13, wherein the magnetic isolation plate comprises a middle protrusion structure and a peripheral protrusion structure, wherein an accommodation space is formed between the middle protrusion structure and the peripheral protrusion structure, and at least a portion of the transmitter coil is accommodated within the accommodation space.

19. The wireless charging device according to claim 13, wherein the transmitter coil complies with a wireless charging standard (Qi).

FIG.1
PRIOR ART

FIG.2
PRIOR ART

FIG.3
PRIOR ART

FIG.4
PRIOR ART

3

Wireless charging device

32

Transmitting module

322

31

Driving circuit module

Transmitter coil

FIG.5

$D_{msw}$

$D_{ow2}$

$D_{iw2}$

32232

32233

321

$D_{il2}$ $D_{ol2}$ $D_{msl}$

32234

32231

$\begin{matrix} 3221 \\ 3222 \\ 3223 \end{matrix}\Big\}\,322$  $\begin{matrix} 32231 \\ 32232 \\ 32233 \\ 32234 \end{matrix}\Big\}\,3223$  3221  3222

# FIG.6

FIG.7

FIG.8

FIG.9

FIG.10

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/254136 A1 (UEDA AKIO [JP] ET AL) 6 September 2018 (2018-09-06) | 1-4,6-9, 13-16 | INV. H02J50/10 |
| Y | * figures 1-3 * <br> * paragraph [0047] - paragraph [0048] * <br> * paragraph [0052] * | 5,10-12, 17-19 | B60L53/12 <br> H01F27/28 <br> H01F38/14 <br> H02J50/70 |
| Y | CN 207 977 789 U (NINGBO WEIE ELECTRONIC TECH CO LTD) 16 October 2018 (2018-10-16) <br> * figure 3 * <br> * paragraph [0009] - paragraph [0018] * | 5,12,19 | |
| Y | KR 2016 0140473 A (AMOSENSE CO LTD [KR]) 7 December 2016 (2016-12-07) <br> * paragraph [0032] - paragraph [0034] * <br> * paragraph [0092] * | 5,10,12, 17,19 | |
| Y | US 2015/145635 A1 (KURZ ARTHUR [US] ET AL) 28 May 2015 (2015-05-28) <br> * figure 12 * <br> * paragraph [0057] * | 10,17 | |
| Y | CN 207 166 225 U (SAMSUNG ELECTRO MECH) 30 March 2018 (2018-03-30) <br> * figures 4,5 * <br> * paragraph [0063] - paragraph [0079] * | 11,18 | TECHNICAL FIELDS SEARCHED (IPC) <br><br> H02J <br> B60L <br> H01F |

The present search report has been drawn up for all claims

| Place of search | Date of completion of the search | Examiner |
|---|---|---|
| Munich | 30 October 2019 | Martin, Raynald |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 19 6691

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2019

| Patent document cited in search report | Publication date | Patent family member(s) | Publication date |
|---|---|---|---|
| US 2018254136 A1 | 06-09-2018 | CN 107924752 A<br>DE 112016003866 T5<br>US 2018254136 A1<br>WO 2017033859 A1 | 17-04-2018<br>17-05-2018<br>06-09-2018<br>02-03-2017 |
| CN 207977789 U | 16-10-2018 | CN 108462261 A<br>CN 207977789 U | 28-08-2018<br>16-10-2018 |
| KR 20160140473 A | 07-12-2016 | KR 20160140311 A<br>KR 20160140473 A | 07-12-2016<br>07-12-2016 |
| US 2015145635 A1 | 28-05-2015 | US 2015145635 A1<br>US 2015244203 A1<br>US 2018138732 A1<br>WO 2019133503 A1 | 28-05-2015<br>27-08-2015<br>17-05-2018<br>04-07-2019 |
| CN 207166225 U | 30-03-2018 | CN 108155724 A<br>CN 207166225 U<br>KR 20180063768 A | 12-06-2018<br>30-03-2018<br>12-06-2018 |

EPO FORM P0459

For more details about this annex : see Official Journal of the European Patent Office, No. 12/82